# EUROPEAN PATENT APPLICATION

(11) **EP 1 878 904 A2**
(43) Date of publication of application: **16.01.2008**
(21) Application number: 07111927.5
(22) Date of filing: 06.07.2007
(51) Int. Cl.: F02K 1/56

(54) **Thrust reverser assembly for a gas turbine engine and method of operating same**

(30) Priority: 11.07.2006 US 456666
(71) Applicant: GENERAL ELECTRIC COMPANY, Schenectady, NY 12345 (US)
(72) Inventor: Hauer, Thomas Anthony, West Chester, OH 45069 (US); Stuart, Alan Roy, Cincinnati, OH 45242 (US); Fehrmann, John Robert, Loveland, OH 45140 (US)
(74) Representative: Illingworth-Law, William Illingworth

(57) **Abstract**

A thrust reverser assembly (100) for a gas turbine aircraft engine is provided. The thrust reverser assembly (100) includes a first plurality of turning vanes (180) for channeling airflow from the gas turbine engine (10) across a surface of an aircraft wing (12) to facilitate increasing lift, and a second plurality of turning vanes (182) for channeling airflow from the gas turbine engine to effect reverse thrust.

## Description

### BACKGROUND OF THE INVENTION

This invention relates generally to aircraft gas turbine engines, and more particularly to a thrust reverser and assisted lift assembly that may be utilized with a gas turbine engine.

Aircraft wings are generally designed to provide sufficient lift during flight while also achieving the least possible drag. For example, the shape of the wing is designed such that the aircraft is relatively efficient at cruising speed and also designed to compensate for the relatively low air speeds such as those that may be encountered by the aircraft during takeoff and landing.

However, when the aircraft is operated during a takeoff or landing operation, either the angle of attack of the aircraft or the reduced flight speed may cause the aircraft to stall. More specifically, when the aircraft speed is sufficiently reduced, the aerodynamic forces acting upon the wings are similarly reduced such that the wings produce less lift and correspondingly more drag. During operation, the increased drag causes the airspeed to reduce further so that the wing produces even less lift. At least one known method of increasing the airflow across the surface of the wings includes increasing the engine power to facilitate increasing the velocity of the airflow across the wings and thus facilitate increasing lift and reducing drag during either takeoff or landing operations. However, increasing the engine power to facilitate increasing the velocity of the airflow across the wings may not be practical during all takeoff and landing procedures.

### BRIEF DESCRIPTION OF THE INVENTION

In one aspect, a method is provided for operating a gas turbine engine assembly for an aircraft that includes a wing. The gas turbine engine includes a core gas turbine engine and a fan coupled to the core gas turbine engine, the gas turbine engine assembly extends upstream from the wing and includes a first cowl, and a second cowl that is repositionable with respect to the first cowl. The method includes selectively positioning the second cowl in a second operational position such that airflow is channeled from the gas turbine engine across a surface of the wing to facilitate increasing lift, and selectively positioning the second cowl in a third operational position such that the airflow is channeled from the gas turbine engine to effect reverse thrust.

In another aspect, a thrust reverser assembly is provided. The thrust reverser assembly includes a first plurality of turning vanes for channeling airflow from the gas turbine engine across a surface of an aircraft wing to facilitate increasing lift, and a second plurality of turning vanes for channeling airflow from the gas turbine engine to effect reverse thrust.

In a further aspect, a gas turbine engine assembly for an aircraft is provided. The gas turbine engine assembly includes a core gas turbine engine, a fan assembly coupled to the core gas turbine engine, the fan assembly comprising a fan and a cowl circumscribing the fan such that a channel is defined between the cowl and the core gas turbine engine, the cowl comprising a first stationary cowl and a second cowl that is repositionable with respect to the first cowl, and a cascade box including a first plurality of turning vanes for channeling airflow from the gas turbine engine across a surface of an aircraft wing to facilitate increasing lift, and a second plurality of turning vanes for channeling airflow from the gas turbine engine to effect reverse thrust.

### BRIEF DESCRIPTION OF THE DRAWINGS

Embodiments of the present invention will now be described, by way of example only, with reference to the accompanying drawings, in which:
Figure 1 is a side view of an exemplary aircraft turbofan gas turbine engine that is mounted to an upper surface of an aircraft wing and includes an exemplary assisted lift thrust reverser assembly;
Figure 2 is a side view of an exemplary aircraft turbofan gas turbine engine that is mounted to a lower surface of an aircraft wing and includes an exemplary assisted lift thrust reverser assembly;
Figure 3 is a partly sectional side view of the assisted lift thrust reverser shown in Figure 2 is a first operational position;
Figure 4 is a partly sectional side view of the assisted lift thrust reverser shown in Figure 2 is a second operational position; and
Figure 5 is a partly sectional side view of the assisted lift thrust reverser shown in Figure 2 is a third operational position.

### DETAILED DESCRIPTION OF THE INVENTION

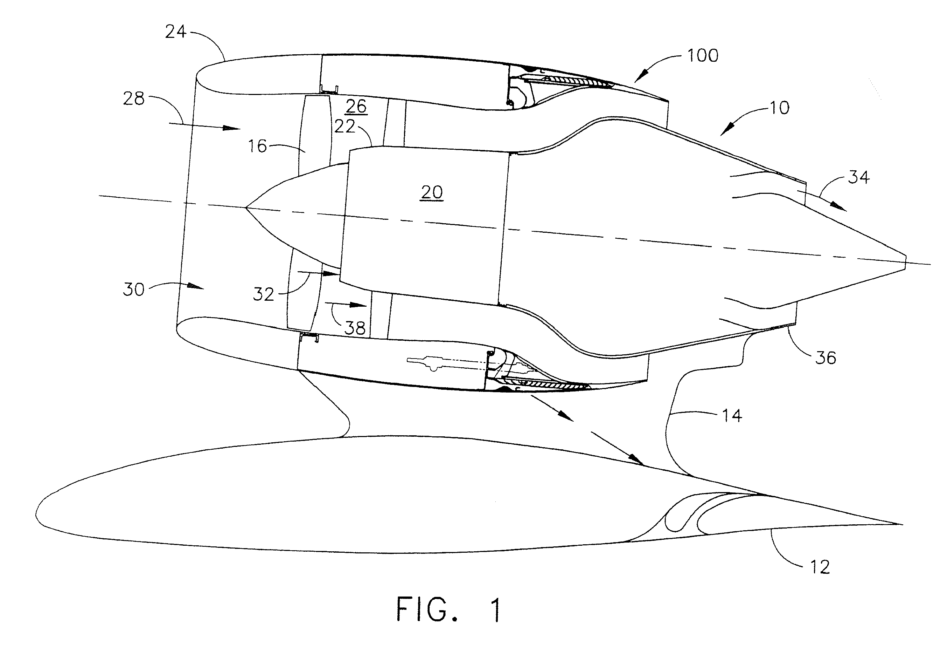

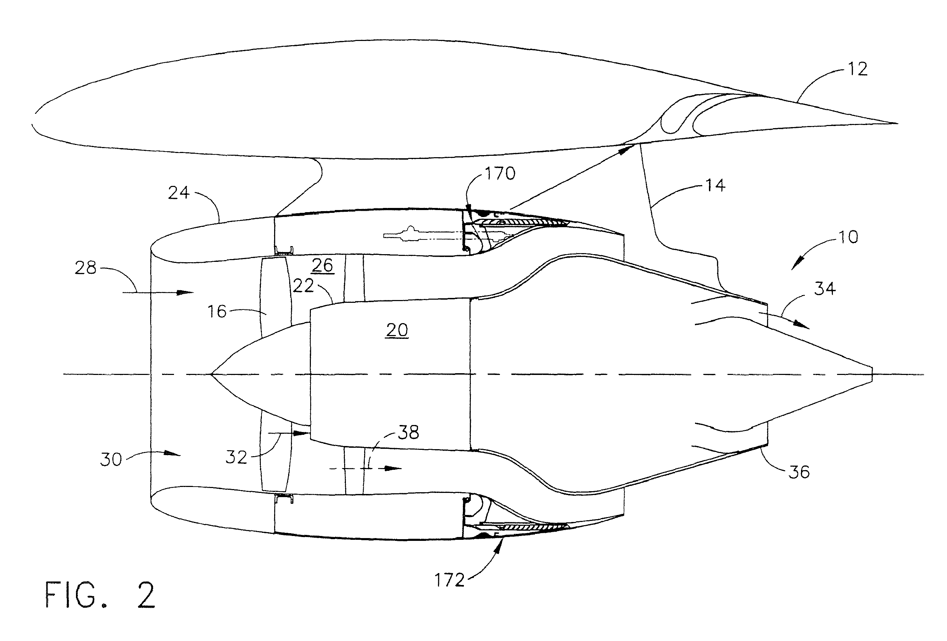

Figure 1 is a side view of an exemplary aircraft turbofan gas turbine engine 10 that is mounted to an upper surface of an aircraft wing 12 and includes an exemplary assisted lift thrust reverser assembly 100. Figure 2 is a side view of exemplary aircraft turbofan gas turbine engine 10 that is mounted to a lower surface of aircraft wing 12 and includes exemplary assisted lift thrust reverser assembly 100. In the exemplary embodiment, gas turbine engine 10 is mounted to a wing 12 of an aircraft using a pylon 14 and includes a fan 16 that is powered by a core gas turbine engine 20. Core gas turbine engine 20 includes a compressor, combustor, and high and low pressure turbines (all not shown), wherein the high pressure turbine provides power of driving the compressor, and the low pressure turbine powers the fan 16.

In the exemplary embodiment, core gas turbine engine 20 is enclosed in an annular core cowl 22, and a fan nacelle 24 surrounds the fan 16 and a portion of the core engine 20. An annular bypass duct 26 is defined between a forward portion of core cowl 22 around core gas turbine engine 20 and the aft inner surface of nacelle 24 spaced radially outwardly therefrom.

During operation, ambient air 28 enters an inlet 30 of gas turbine engine assembly 10 and flows past fan 16. A first portion 32 of airflow 28 is channeled through core gas turbine engine 20, compressed, mixed with fuel, and ignited for generating combustion gases 34 which are discharged from a core nozzle 36 of core gas turbine engine 20. A second portion 38 of airflow 28 is channeled downstream through bypass duct 26 to an exemplary assisted lift thrust reverser assembly 100.

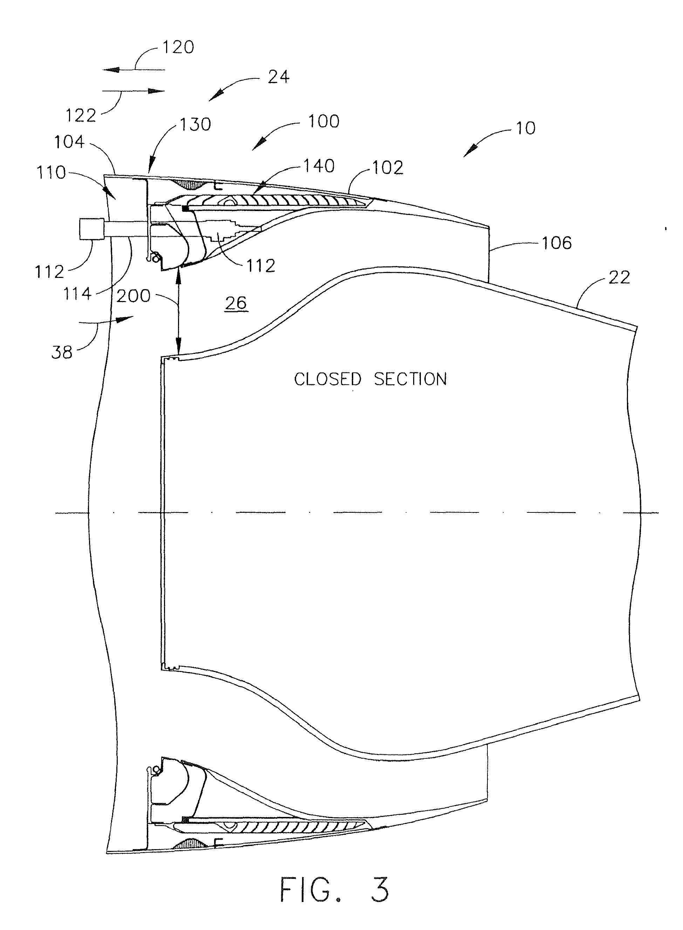

Figure 3 is a partly sectional side view of the assisted lift thrust reverser 100 shown in Figure 2 is a first operational position. Although the description of assisted lift thrust reverser 100 is shown in Figures 3-5 with respect to Figure 2, i.e. gas turbine engine 10 is mounted below wing 12 such that assisted lift airflow may be channeled across a lower surface of wing 12, it should be realized that assisted lift thrust reverser 100 may also be configured to operate when gas turbine engine 10 is coupled above wing 12 as shown in Figure 1 such that assisted lift airflow may be channeled across an upper surface of wing 12.

In the exemplary embodiment, assisted lift thrust reverser assembly 100 includes an annular aft cowl 102 which is movably coupled to a stationary forward cowl 104 to form nacelle 24. Aft cowl 102 has an aft or downstream end defining, with a portion of the core cowl 22, a discharge fan nozzle 106 having a area such that during operation airflow second portion 38 that is channeled through bypass duct 26 may be discharged through fan nozzle 106 during selected operation. In the exemplary embodiment, assisted lift thrust reverser assembly 100 also includes a cowl moving apparatus 110 that is coupled to aft cowl 102 to facilitate selectively axially translating aft cowl 102 relative to forward cowl 104.

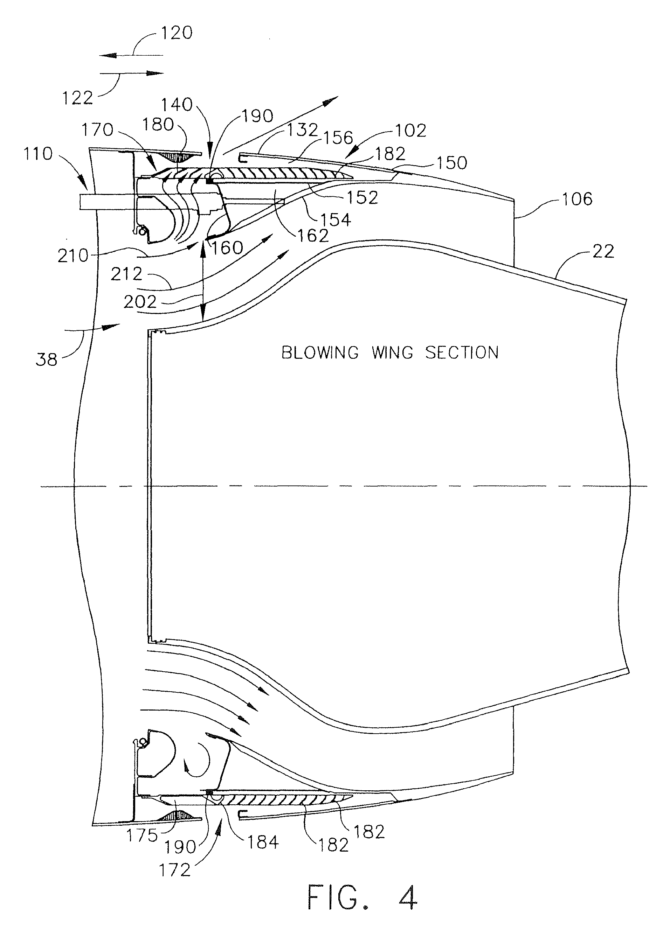

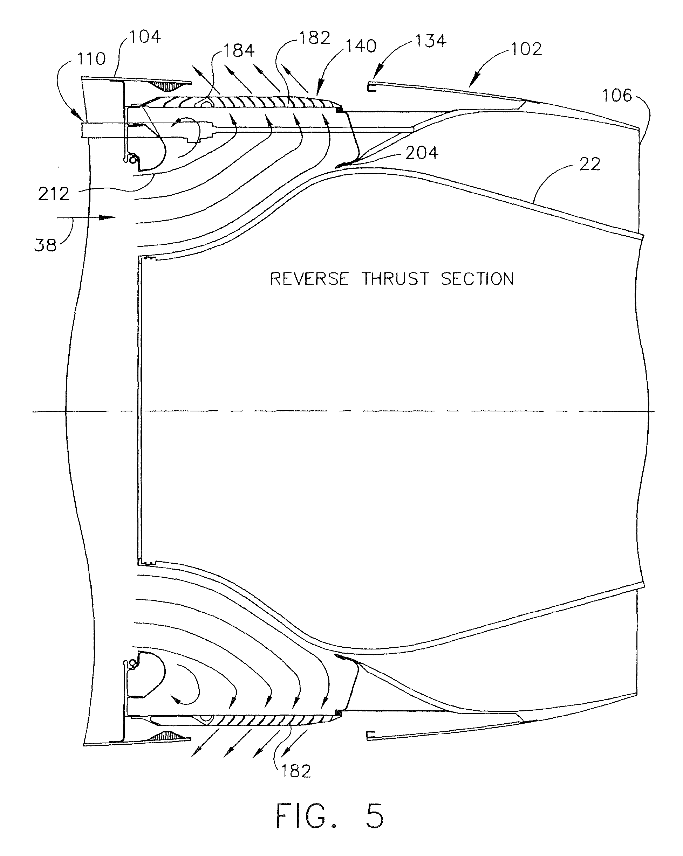

In the exemplary embodiment, apparatus 110 includes a plurality of circumferentially spaced apart actuators or motors 112, a plurality of extending rods 114, such as ball screws, that are each coupled to a respective motor 112 and also to aft cowl 102 such that energizing motors 112 facilitates moving or translating aft cowl 102 in either a forward direction 120 or an aft direction 122. In the exemplary embodiment, cowl moving apparatus 110 may be electrically pneumatically, or fluidly powered to facilitate axially translating aft cowl 102 from a first position 130 which is fully retracted against the forward cowl 104, to a second position 132 (shown in Figure 4), wherein the aft cowl 102 is partially extended from forward cowl 104 in aft direction 122, and to a third position 134 (shown in Figure 5) wherein aft cowl 100 is fully extended from forward cowl 104 in aft direction 122.

Assisted lift thrust reverser assembly 100 also includes a plurality of cascade turning vanes 140, referred to herein as a cascade box 140 that are disposed between or at the juncture of the aft and forward cowls 102 and 104 and are selectively uncovered upon axial translation of aft cowl 102 as will be discussed later herein. As shown in Figure 3, aft cowl 102 is positioned in a first operational configuration 130 or a stowed configuration such that the cascade box 140 is substantially covered by aft cowl 102 and such that the fan exit air 38 that is channeled through bypass duct 26 and discharged through fan nozzle 106.

Figure 4 is a partly sectional side view of the assisted lift thrust reverser assembly 100 shown in Figure 2 in a second operational position 132. As shown in Figure 4, aft cowl 102 includes an outer panel 150 and a radially inner panel 152 that is coupled to radially outer panel 150 at an aft cowl trailing edge 154. In the exemplary embodiment, outer panel 150 and inner panel 152 define a cavity 156 therebetween that is sized to house cascade box 140 when aft cowl 102 is in the stowed position. Aft cowl 102 also includes an air flow diverter 160 that extends radially inwardly from inner panel 152 and a support apparatus 162 that is coupled between airflow diverter 160 and a trailing edge of inner panel 152 to facilitate providing structural support to airflow diverter 160.

As shown in Figure 4, cascade box 140 includes a first portion 170 that has a substantially semi-cylindrical shape and extends around an upper surface of core gas turbine engine 20 and a second portion 172 that is substantially semi-cylindrical shape and extends around a lower surface of core gas turbine engine 20 such that cascade box 140 extends substantially circumferentially around core gas turbine engine 20. Optionally, if gas turbine engine 10 is coupled above wing 12 as shown in Figure 1, first portion 170 extends around a lower surface of core gas turbine engine 20 and a second portion 172 extends around an upper surface of core gas turbine engine 20 such that cascade box 140 extends substantially circumferentially around core gas turbine engine 20.

First portion 170 includes a first plurality of cascade turning vanes 180 that are oriented to channel airflow 38 within bypass duct 26 through cascade box 140 in a substantially aftward direction 122 with respect to core gas turbine engine 20, a second plurality of cascade turning vanes 182 that are oriented to channel airflow 38 within bypass duct 26 through cascade box 140 in a substantially forward direction 120 with respect to core gas turbine engine 20, and a divider 184 coupled therebetween as shown in Figure 5.

Second portion 172 does not include cascade turning vanes 180, but rather includes a blank or blocking device 175 that facilitates preventing airflow 38 that is channeled through bypass duct 26 from being discharged through cascade box 140 when aft cowl 102 is in a predetermined configuration discussed below. More specifically, airflow blocking device 175 is coupled substantially coaxially with the first plurality of turning vanes 180 and extends substantially semi-circumferentially around the gas turbine engine such that such that the blocking device 175 substantially prevents airflow from flowing through at least a portion of cascade box 140. In the exemplary embodiment, airflow blocking device 175 facilitates preventing airflow through a portion of cascade box 140 when aft cowl 102 is in the second operation position 132 since the second operational position 132 is utilized to provide additional airflow in the aftward direction 122 and thus across wing 12 to supplement lift.

Second portion 172 also includes second plurality of cascade turning vanes 182 that are oriented to channel airflow 38 within bypass duct 26 through cascade box 140 in a substantially forward direction 120 with respect to core gas turbine engine 20 as shown in Figure 5.

For example, during a first mode of operation, aft cowl 102 is positioned in the first or stowed position 130, as shown in Figure 3 such that a first dimension 200 is defined between core cowl 22 and aft cowl 102 and such that airflow 38 that is channeled through bypass duct 26 is discharged through fan nozzle 106. As such, when aft cowl 102 is in the stowed position 130, airflow 38 is substantially prevented from flowing through cascade box 140. In the exemplary embodiment, aft cowl 102 is positioned in the stowed position 130 when the aircraft is operating in a cruise mode, i.e. during normal flight conditions.

Optionally, when the aircraft is preparing to land, for example, an operator may choose to move aft cowl 102 from the first or stowed position 130 to the second operational position 132, shown in Figure 4, such that a dimension 202 is defined between the engine cowl and aft cowl 102 and such that a first portion 210 of airflow 38 is channeled through cascade box 140 and a second portion 212 of airflow 38 is channeled through fan nozzle 106 via dimension 202. In the exemplary embodiment, the second dimension 202 is less than the first dimension 200, i.e. the dimension of the gas turbine engine is reduced to facilitate channeling the first portion 210 of airflow 38 through cascade box 140. Thus the total quantity of airflow 38 channeled through fan nozzle 106 is reduced when the aft cowl 102 is in the second operational position 132.

More specifically, aft cowl moving apparatus 110 is operated to facilitate moving aft cowl 102 from the first operational position 130 to the second operational position 132. As shown in Figure 4, when aft cowl 102 is in the second operational position 132, a seal 190 that is coupled to aft cowl 102 is in sliding contact with divider 184 such that a first portion 210 of airflow 38 is channeled past airflow diverter 160 and through cascade box 140. Specifically, moving aft cowl 102 to the second position 132 facilitates channeling airflow 38 through cascade turning vanes 180 such that a portion 210 of airflow 38 is channeled axially aft from gas turbine engine 20 across wing 12 to facilitate increasing lift.

Optionally, when the aircraft has landed, and an operator desires to effect reverse thrust, an operator may choose to move aft cowl 102 from either the first or second position 130 and 132, respectively, to the third operational position 134, shown in Figure 5, such that a third dimension 204 is defined between the core engine cowl 22 and aft cowl 102 and such that a second quantity 212 of airflow 38 is channeled through turning vanes 182. In the exemplary embodiment, the third dimension 204 is less than the first and second dimensions 200 and 202, respectively, such that the majority of airflow 38 is channeled through cascade box 140 thus the total quantity of airflow 38 channeled through fan nozzle 106 is further reduced when the aft cowl 102 is in the third operational position 134.

More specifically, aft cowl moving apparatus 110 is operated to facilitate moving aft cowl 102 to the third operational position 134. As shown in Figure 5, when aft cowl 102 is in the third operational position 134 airflow 38 is channeled through cascade turning vanes 182 to facilitate effecting thrust. More specifically, since cascade box 140 includes a first quantity of turning vanes 180 to facilitate increasing lift cascade box 140 and also includes a second number of turning vanes 182 that is greater than the first number of turning vanes 180 such that when aft cowl 102 is in the third operational position 134, the volume of airflow being channeled through turning vanes 182 is significantly greater than the volume of airflow channeled through turning vanes 180 when aft cowl 102 is in the second operational position 132. As such, any airflow that may be channeled through the turning vanes 180, i.e. to effect lift, will have a negligible effect on the airflow channeled through turning vanes 182 to effect thrust. Thus when aft cowl 102 is in the third operational position 134, the airflow 38 channeled through cascade box 140 facilitates effecting thrust to slow the aircraft.

Described herein is an assisted lift thrust reverser assembly that may be utilized on a wide variety of gas turbine engines coupled to an aircraft. Specifically, the thrust reverser described herein includes an intermediate operational position that permits a portion of fan flow to exit the nacelle through a portion of the cascade box set to effect lift. Specifically, the turning vanes that effect lift may be oriented in a plurality of circumferential angles to divert up to 180 degrees of engine flow towards the wing trailing edge such that the airflow is directed to an area that is aftward from a point that is approximately 70% of the wing chord to facilitate adding energy to the boundary layer at either the upper or lower surface of the wing and thus increase lift. The other 180 degrees of the engine may include blank-off boxes to prevent airflow from leaving the nacelle since the airflow discharged from the lower portion of the gas turbine engine is not directed at the wing trailing edge to effect lift in an underwing engine application. This intermediate mode of operation may be selected by the pilot/control during take-off and approach. Whereas, when the aft cowl is fully extended to expose substantally all of the turning vanes, the thrust reverser operation is effected. Moreover, when the aft cowl is fully retracted, the nacelle operates at cruise performance similar to the current production ncaelles.

The assisted lift thrust reverser assembly described herein utilizes a minimum quantity of parts to effected the assisted lift mode into the thrust reverser while maintaining aerodynamic performance. During aircraft operations when the aircraft speed is sufficiently reduced to facilitate takeoff or landing procedures, channeling airflow across the surface of the wing increases lift. As such, the engine power may be maintained at an optimal power for takeoff and landing, i.e. the power may not need to be increased, to facilitate increasing the velocity of the airflow across the wings and thus increase lift during all takeoff and landing procedures.

While the invention has been described in terms of various specific embodiments, those skilled in the art will recognize that the invention can be practiced with modification within the spirit and scope of the claims.

## Claims

1. A thrust reverser assembly (100) for a gas turbine aircraft engine, said thrust reverser assembly comprising:
a first plurality of turning vanes (180) for channeling airflow from the gas turbine engine (10) across a surface of an aircraft wing (12) to facilitate increasing lift; and
a second plurality of turning vanes (182) for channeling airflow from the gas turbine engine to effect reverse thrust.

2. A thrust reverser assembly (100) in accordance with Claim 1 wherein said gas turbine engine (10) comprises a first cowl and a second cowl that is repositionable with respect to said first cowl, said thrust reverser assembly further comprises a cowl moving apparatus to selectively position said second cowl in a first operational position (130) such a fan airflow (28) is channeled through said first plurality of turning vanes (180) to facilitate increasing lift.

3. A thrust reverser assembly (100) in accordance with Claim 1 wherein said gas turbine (10) engine comprises a first cowl and a second cowl that is repositionable with respect to said first cowl, said thrust reverser assembly further comprises a cowl moving apparatus to selectively position said second cowl in a second operational position (132) such that a fan airflow (28) is channeled through said second plurality of turning vanes (182) to effect reverse thrust.

4. A thrust reverser assembly (100) in accordance with Claim 1 wherein said first plurality of turning vanes (180) extend substantially semi-circumferentially around said gas turbine engine (10).

5. A thrust reverser assembly (100) in accordance with Claim 4 wherein said thrust reverser assembly further comprises an air blocking apparatus that is coupled substantially coaxially with said first plurality of turning vanes and extends substantially semi-circumferentially around said gas turbine engine (10), said air blocking apparatus configured to substantially prevent air from being discharged through said first and second plurality of turning vanes (180, 182).

6. A thrust reverser assembly (100) in accordance with Claim 2 wherein said cowl moving apparatus is configured to move said second cowl to a stowed position wherein airflow (28) is prevented from flowing through said first or second plurality of turning vanes (180, 182).

7. A thrust reverser assembly (100) in accordance with 2 wherein said cowl moving apparatus is configured to reposition said second cowl to a first operational position (130) such that a first quantity of airflow (28) is channeled through the first plurality of turning vanes (180) and reposition said second cowl to a second operational position (132) such that a second quantity of airflow is channeled through the second plurality of turning vanes (182), said second quantity of airflow greater than the first quantity of airflow.

8. A gas turbine engine assembly comprising:
a core gas turbine engine (20);
a fan assembly coupled to said core gas turbine engine, said fan assembly comprising a fan (16) and a cowl circumscribing said fan such that a channel is defined between said cowl and said core gas turbine engine, said cowl comprising a first stationary cowl and a second cowl that is repositionable with respect to said first cowl; and
a cascade box (140) comprising:
a first plurality of turning vanes (180) for channeling airflow (28) from the gas turbine engine (10) across a surface of an aircraft wing (12) to facilitate increasing lift; and
a second plurality of turning vanes (182) for channeling airflow from the gas turbine engine to effect reverse thrust.

9. A gas turbine engine assembly in accordance with Claim 8 further comprising a cowl moving apparatus coupled to said second cowl and operable to selectively position said second cowl in a first operational position (130) such that a fan airflow (28) is channeled through said first plurality of turning vanes (180) to facilitate increasing lift.

10. A gas turbine engine assembly in accordance with Claim 8 further comprising a cowl moving apparatus coupled to said second cowl and operable to selectively position said second cowl in a second operational position (132) such that a fan airflow (28) is channeled through said first and second plurality of turning vanes (180, 182) to effect reverse thrust.
